# EUROPEAN PATENT SPECIFICATION

(11) **EP 2 431 831 B1**
(45) Date of publication and mention of the grant of the patent: **01.07.2020**
(21) Application number: 11167347.1
(22) Date of filing: 24.05.2011
(51) Int. Cl.: G05F 1/575

(54) **Electric device and control method of the same**
Elektrische Vorrichtung und Steuerverfahren dafür
Dispositif électrique et son procédé de commande

(30) Priority: 18.08.2010 KR 20100079749
(43) Date of publication of application: 21.03.2012
(73) Proprietor: Samsung Electronics Co., Ltd., Suwon-si, Gyeonggi-do, 443-742 (KR)
(72) Inventor: Kim, Jong-min, 442-742, Gyeonggi-do (KR)
(74) Representative: D'Halleweyn, Nele Veerle Trees Gertrudis

(56) References cited:
- JP-A- 2005 184 484
- US-A- 5 867 715
- US-A1- 2002 178 390
- US-A1- 2005 268 134
- US-A1- 2008 164 765
- US-B1- 6 583 607

## Description

### BACKGROUND OF THE INVENTION

### 1. Field of the Invention

Apparatuses and methods consistent with the exemplary embodiments relate to an electric device and a control method of the same, and more particularly, to an electric device and a control method of the same which receives power from an auxiliary power source such as a battery.

### 2. Description of the Related Art

Electric devices may be operated by using several different power modes in order to save on power consumption. Typically, the power modes include a normal mode, a screen save mode, an idle mode and an automatic off mode.

One of the critical issues in a portable mobile electric device is a stable power supply while being transported. If the mobile electric device receives power from a battery, power consumption may be reduced by decreasing a voltage output from a constant voltage output unit, such as a DC/DC converter, compared to a rated voltage when receiving power from an adaptor may be used to secure a battery life. That is, a power save mode which reduces a voltage margin of a load terminal to increase the battery life is used. If power required for the load terminal drastically changes or the load terminal is overloaded consistently, there is a possibility that a sufficient voltage is not applied to the load terminal, and a system of the electric device may have an error.

Hee-Jun Park et al. ("Electronic device and control method thereof", US2005/0268134) discloses an electronic device with a plurality of electronic components, including a microcomputer, a first regulator, a second regulator, and a controller controlling the power from the second regulator, in order for a battery of the electronic device to have a longer running time.

### SUMMARY OF THE INVENTION

Aspects and utilities of the present general inventive concept will be set forth in part in the description which follows and, in part, will be obvious from the description, or may be learned by practice of the present general inventive concept.

The present general inventive concept provides an electric device and a control method of the same which supplies stable power corresponding to a drastic change in a load terminal.

The present general inventive concept provides an electric device and a control method of the same which prevents a system error due to a drastic change in a load terminal.

Features and/or utilities of the present general inventive concept can be realized by an electric device according to claim 1. The electric device includes a constant voltage output unit including a feedback terminal to receive a feedback voltage and an output terminal to output an output voltage generated on the basis of the received feedback voltage and a predetermined reference voltage. The electric device further includes a feedback circuit connected between the output terminal and the feedback terminal and to adjust the feedback voltage applied to the feedback terminal, a load terminal to receive power from the constant voltage output unit, a detector to output an enable signal when a voltage level of a power input terminal of the load terminal is a predetermined critical value or less, and a controller to receive the outputted enable signal and to control the feedback circuit to adjust the feedback voltage, wherein when the controller receives the outputted enable signal, the controller controls the feedback circuit to adjust the feedback voltage to cause the constant voltage output unit to output a rated voltage from the output terminal.

The predetermined critical value may be lower than a lowest level of the output voltage.

The feedback circuit may include a first resistor connected between the output terminal and the feedback terminal, a plurality of branch resistors connected in parallel between a first node provided between the first resistor and the feedback terminal, and a ground terminal, and at least one switch connected in series to the branch resistors between the branch resistors and the ground terminal. The controller may include a microcomputer to output a first control signal to control the feedback circuit to adjust the feedback voltage to cause the constant voltage output unit to output a rated voltage from the output terminal, and an OR circuit to receive one of the first control signal and the enable signal, and when one of the first control signal and the enable signal is received, to output a signal to one of the switches to turn on the respective switch.

The feedback circuit may include a first resistor connected between the output terminal and the feedback terminal, a plurality of branch resistors connected in series between a first node provided between the first resistor and the feedback terminal, and a ground terminal, and a switch individually connected between at least one node of the plurality of branch resistors and the ground terminal. The controller may include a microcomputer to output a first control signal to control the feedback circuit to adjust the feedback voltage to cause the constant voltage output unit to output a rated voltage from the output terminal, and an OR circuit to receive one of the first control signal and the enable signal and when one of the first control signal and the enable signal is received, to output a signal to the switch to turn on the switch.

The electric device may further include an adaptor and a battery which supply source power to the constant voltage output unit, and the load terminal may be driven by one of an adaptor mode in which the adaptor supplies the source power, and a battery mode in which the battery supplies the source power, and the controller may control the feedback circuit to adjust the feedback voltage to cause the constant voltage output unit to decrease the output voltage to be lower than the rated voltage if the load terminal is driven in the battery mode.

Features and/or utilities of the present general inventive concept may also be realized by a control method of an electric device according to claim 7. The method is a control method of an electric device which includes a constant voltage output unit including a feedback terminal to receive a feedback voltage and an output terminal to output an output voltage generated on the basis of the received feedback voltage and a predetermined reference voltage, and a load terminal to receive power from the constant voltage output unit, the control method including adjusting the feedback voltage applied to the feedback terminal on the basis of a control signal, detecting a voltage level of a power input terminal of the load terminal and determining whether the detected voltage level is a predetermined critical value or less, outputting an enable signal if it is determined that the detected voltage level is the critical value or less, and adjusting the feedback voltage to cause the constant voltage output unit to output a rated voltage from the output terminal according to the enable signal.

The predetermined critical value may be lower than a lowest level of the output voltage.

The electric device may include a first resistor connected between the output terminal and the feedback terminal, a plurality of branch resistors connected in parallel between a first node provided between the first resistor and the feedback terminal, and a ground terminal, a feedback circuit which includes at least one switch connected in series to the branch resistors between branch resistors and the ground terminal, and the control method may further include outputting the enable signal to one of the switches that is turned on by a first control signal to cause the constant voltage output unit to output the rated voltage from the output terminal.

The electric device may include a first resistor connected between the output terminal and the feedback terminal, a plurality of branch resistors connected in series between a first node provided between the first resistor and the feedback terminal, and a ground terminal, a feedback circuit which includes a switch individually connected between at least one node of the branch resistors and the ground terminal, and the control method may further include outputting the enable signal to one of the switches that is turned on by a first control signal to cause the constant voltage output unit to output the rated voltage from the output terminal.

The electric device may further include an adaptor and a battery to supply source power to the constant voltage output unit, and the control method may further include determining whether the source power is supplied by which one of the adaptor and the battery, and adjusting the feedback voltage to cause the constant voltage output unit to output a level of voltage lower than the rated voltage if it is determined that the source power is supplied by the battery.

Features and/or utilities of the present general inventive concept may also be realized by an electric device including a load terminal, a constant voltage output unit to generate an output voltage to the load terminal, a feedback circuit having a plurality of feedback circuit elements to generate a feedback signal to the constant voltage output unit to adjust the output voltage, and a controller to set a power mode of the electric device and to generate a control signal according to an enable signal and the set power mode such that the control signal corresponds to one or more of the feedback circuit elements to adjust the feedback signal, wherein the enable signal corresponds to a level of the output voltage.

The control signal may include a plurality of sub-control signals to correspond to the respective feedback circuit elements and the controller may selectively output one or more of the plurality of sub-control signals according to the set power mode and the enable signal.

The electric device may include a detector to detect the output voltage and to generate the enable signal if the level of the output voltage is equal to or less than a predetermined critical level.

If the set power mode is a low power mode and the enable signal is off, the control signal may interact with at least one of the feedback circuit elements to adjust the feedback signal to adjust the output voltage to a level lower than a rated voltage, and if the set power mode is the low power mode and the enable signal is on, the control signal may interact with at least one of the feedback circuit elements to adjust the feedback signal to adjust the output voltage to the rated voltage.

The feedback circuit may generate the feedback signal as a proportion of the output voltage according to the control signal and the constant voltage output unit generates the output voltage according to the proportion. The constant voltage output unit may increase the output voltage when the proportion of the feedback signal and the output voltage increases and may decrease the output voltage when the proportion of the feedback signal and the output voltage decreases.

### BRIEF DESCRIPTION OF THE DRAWINGS

The above and/or other aspects of the present general inventive concept will become apparent and more readily appreciated from the following description of the exemplary embodiments, taken in conjunction with the accompanying drawings, in which:
FIG. 1 is a control block diagram of an electric device according to an exemplary embodiment of the present general inventive concept;
FIG. 2 is a feedback circuit diagram of the electric device according to an exemplary embodiment of the present general inventive concept;
FIG. 3 is another feedback circuit diagram of the electric device according to an exemplary embodiment of the present general inventive concept;
FIG. 4 is a control flowchart of a power control method of the electric device according to an exemplary embodiment of the present general inventive concept;
FIG. 5 is a control block diagram of an electric device according to an exemplary embodiment of the present general inventive concept; and
FIG. 6 is a control flowchart of a power control method of the electric device according to an exemplary embodiment of the present general inventive concept.

### DETAILED DESCRIPTION OF THE EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

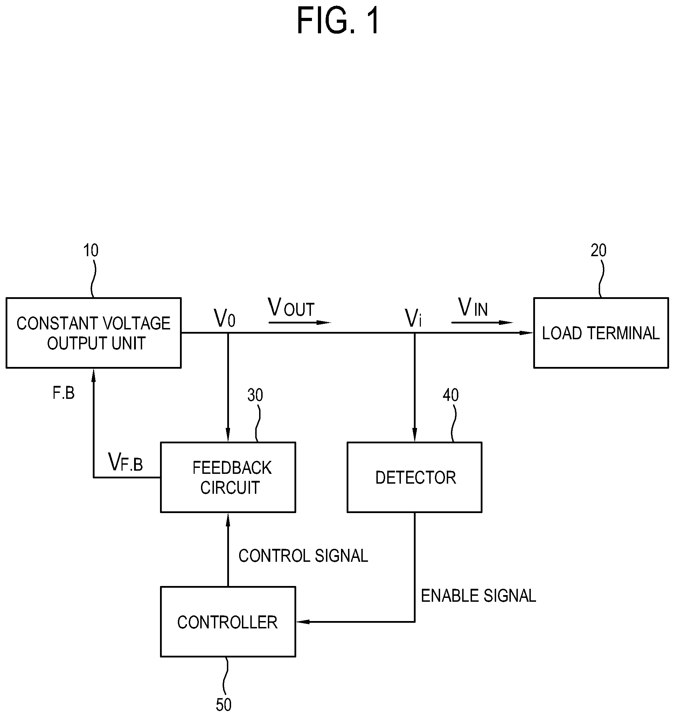

FIG. 1 is a control block diagram of an electric device according to an exemplary embodiment of the present general inventive concept.

As shown therein, the electric device includes a constant voltage output unit 10, a load terminal 20, a feedback circuit 30, a detector 40 and a controller 50 which controls the foregoing elements. The electric device according to the present exemplary embodiment may be included in a mobile terminal such as a notebook computer, a netbook, a portable multimedia player (PMP), a mobile phone, or a TV including a display unit, or a monitor. The electric device may receive power from an adaptor as a main power source or may receive sub power from a battery, such as a rechargeable secondary battery. If a user uses the electric device while moving, he/she mainly uses sub power. If the battery is used, securing the maximum battery life and reducing power consumption for securing the battery life emerge as major issues.

The constant voltage output unit 10 generates a predetermined output voltage VOUT from primitive power supplied by a power supply such as an adaptor or a battery and outputs the output voltage VOUT to the load terminal 20. The constant voltage output unit 10 receives a feedback voltage VF.B at a feedback terminal F.B and outputs the output voltage VOUT at output terminal VO. The level of the output voltage VOUT is determined on the basis of a preset reference voltage (not shown) and the feedback voltage VF.B. The constant voltage output unit 10 may include a DC/DC converter and may convert primitive power into an output voltage VOUT. The constant voltage output unit 10 may generate an output voltage VOUT at various levels depending on a capacity of the load terminal 20 or a power mode. If power is supplied by the battery, the electric device may be set to a low power mode and set the level of the output voltage VOUT to be lower than a rated voltage of the constant voltage output unit 10. If the battery is used, the load terminal 20 may be driven by a voltage lower than a typical rated voltage to extend the life of the battery.

The load terminal 20 includes a circuit unit such as a chipset, and performs various functions by receiving power from the constant voltage output unit 10.

The feedback circuit 30 is connected between an output terminal V0 and the feedback terminal F.B of the constant voltage output unit 10, and adjusts the feedback voltage VF.B applied to the feedback terminal F.B to different levels. The feedback circuit 30 may generate the feedback voltage VF.B as a proportion of the output voltage VOUT. Since a level of the output voltage VOUT is determined on the basis of a preset reference voltage (not shown) and the feedback voltage VF.B, if the level of the feedback voltage VF.B is changed, the load terminal 20 also receives power at a changed level. The constant voltage output unit 10 may increase the output voltage VOUT when the proportion of the feedback voltage VF.B and the output voltage VOUT is increased and may decrease the output voltage VOUT when the proportion of the feedback voltage VF.B and the output voltage VOUT is decreased. The feedback circuit 30 also may receive a control signal from the controller 50. The feedback circuit 30 will be further described later.

The detector 40 detects a level of an input voltage VIN input from a power input terminal Vi of the load terminal 20, and outputs an enable signal if the detected level of the input voltage VIN is a predetermined critical value or less. The critical value may be set to be lower than a lowest level of the output voltage VOUT. If power required for the load terminal 20 drastically changes or the load terminal 20 is overloaded continuously, the system of the electric device may have an error due to a drop of the input voltage VIN of the load terminal 20. The detector 40 detects such a voltage drop, and notifies the controller 50 of the voltage drop by, for example, an enable signal, if the input voltage VIN drops below the critical value.

The controller 50 outputs a control signal to control the feedback circuit 30 to adjust the feedback voltage VF.B applied to the feedback terminal F.B of the constant voltage output unit 10 to different levels. The controller 50 may output the control signal according to an enable signal received from the detector 40. The controller 50 may also include a microcomputer to change a power mode of the electric device according to a predetermined condition.

The electric device may operate according to various power modes such as a normal mode in which a rated voltage is output, and low power modes, such as a screen save mode in which power supplied to a display unit is cut off if the electric device includes the display unit, a power saving mode in which a level of power supplied to a backlight unit is decreased if the electric device includes the backlight unit, and a sleep mode in which lowest power is supplied. The controller 50 outputs to the feedback circuit 30 different control signals according to the foregoing power modes. The control signal may be received from the outside or generated by the controller 50.

The controller 50 controls the input voltage VIN supplied to the load terminal 20 to be a rated voltage upon receiving an enable signal from the detector 40. That is, the controller 50 controls the feedback circuit 30 to adjust the feedback voltage VF.B to cause the constant voltage output unit 10 to supply the rated voltage to prevent a system error which may occur when the load terminal 20 is driven by a voltage lower than a required voltage. The controller 50 according to the present exemplary embodiment controls the feedback circuit 30 to adjust the feedback voltage VF.B to cause the constant voltage output unit 10 to output the rated voltage corresponding to the enable signal. In the case that a low power mode is set and the constant voltage output unit 10 is generating an output voltage at a lower level than the rated voltage and the detector 40 detect a drop in the output voltage VOUT to below a critical predetermined level, the detector 40 may generate an enable signal, causing the controller 50 to control the feedback circuit 30 to adjust the feedback voltage VF.B such that the constant voltage output unit 10 adjusts the output voltage VOUT to a rated voltage.

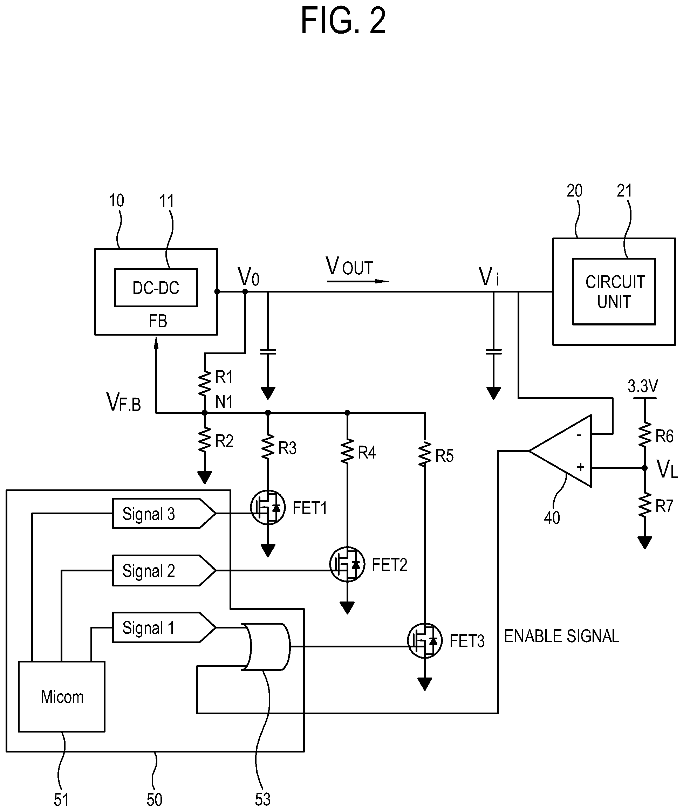

FIG. 2 is a feedback circuit diagram of the electric device according to the present exemplary embodiment. As shown therein, the constant voltage output unit 10 includes a DC/DC converter 11, and the load terminal 20 includes a circuit unit 22. The feedback circuit 30 includes a plurality of resistors R1 to R5 and switches FET1 to FET3. The detector 40 includes a comparator, and the controller 50 includes a microcomputer 51 and an OR circuit 53.

The feedback circuit 30 includes a first resistor R1 connected between the output terminal VO and the feedback terminal F.B, and a plurality of branch resistors R2, R3, R4 and R5 connected in parallel between a first node N1 provided between the first resistor R1 and the feedback terminal F.B, and a ground terminal. The feedback circuit 30 includes switches FET1, FET2 and FET3 which are connected in series to the branch resistors R3, R4 and R5 between some of the plurality of branch resistors R2, R3, R4 and R5 and the ground terminal. The feedback circuit 30 according to the present exemplary embodiment includes four branch resistors R2, R3, R4 and R5 and three switches FET1, FET2 and FET3, but is not limited thereto. Alternatively, the feedback circuit 30 may include a smaller number or a larger number of branch resistors and switches depending on the type of the power mode. By changing a combination of the first resistor R1 and the branch resistors R2 to R5 according to a turning on or a turning off of the switches FET1, FET2 and FET3, a voltage applied to the first node N1 is changed and the output voltage VOUT is adjusted accordingly. According to the present exemplary embodiment, voltages of the feedback terminal F.B and the first node N1 are the same, but an additional resistor may be provided between the feedback terminal F.B and the first node N1. A stabilizing capacitor is connected between the output terminal VO and the ground terminal.

The comparator 40 detects the input voltage VIN of the load terminal 20. If the input voltage VIN is lower than a predetermined critical voltage VL, i.e., low compared to the critical value, the comparator 40 informs the controller 50 of the foregoing. The critical voltage VL is determined by a predetermined power source, a sixth resistor R6 and a seventh resistor R7. The critical voltage VL according to the present exemplary embodiment is set as a level lower than the output voltage VOUT having the lowest level which may be output by the output terminal VO. An output signal which is output by the comparator 40 acts as an enable signal.

The microcomputer 51 may output at least one of plurality of sub-control signals, SIGNAL 1, SIGNAL 2, and SIGNAL 3, as the control signal, each sub-control signal corresponding to one of switches FET1, FET2, and FET3 to turn on or off the switches FET1, FET2 and FET3. The plurality of switches FET1, FET2 and FET3 may all be turned off or on. Also, at least one of the plurality of switches FET1, FET2 and FET3 may be turned on. According to the present exemplary embodiment, only the third switch FET3 is turned on by a first control signal, and the output voltage VOUT becomes a rated voltage when a feedback voltage VF.B is generated by a combination of the first resistor R1, the second resistor R2 and the fifth resistor R5.

The OR circuit 53 receives one of the first control signal controlling the rated voltage to be output, and the enable signal, and outputs the signal to the switch that is turned on by the first control signal, i.e., to a control terminal of the third switch FET3. That is, the OR circuit 53 is connected between the microcomputer 51 and the third switch FET3 that is turned on by the first control signal, and turns on the third switch FET3 according to one of the first control signal and the enable signal.

In the electric device, only the OR circuit 53 and the comparator 40 are added in a front end of the switch FET3 to an existing circuit to thereby detect a voltage drop of the load terminal 20 and automatically cause a rated voltage to be supplied to the load terminal 20 in a predetermined case.

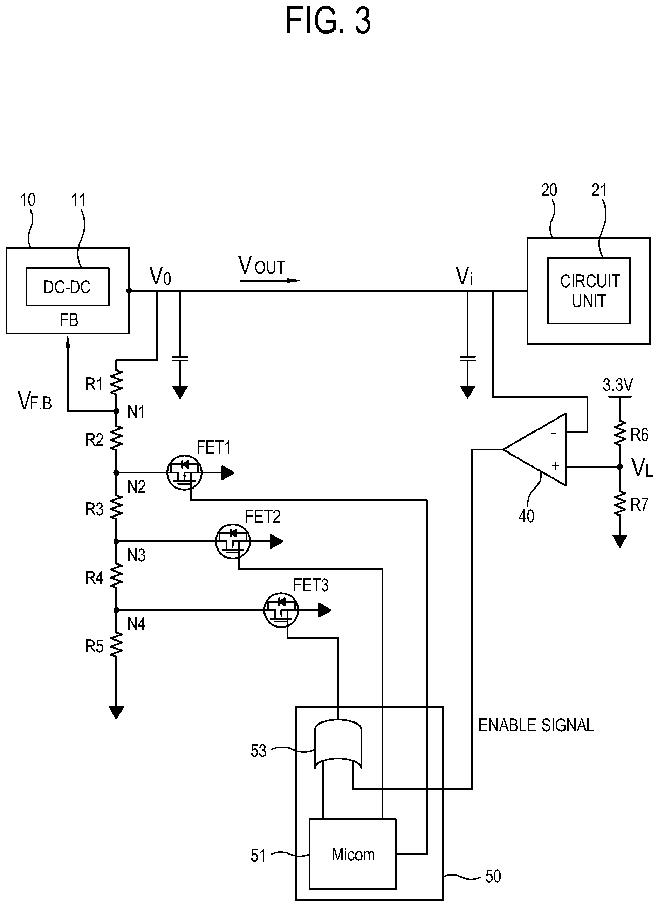

FIG. 3 is a feedback circuit diagram of an electric device according to another exemplary embodiment of the present invention.

As shown therein, the feedback circuit 30 includes a first resistor R1 and branch resistors R2, R3, R4 and R5 connected in series rather than in parallel. That is, the feedback circuit 30 includes the first resistor R1 connected between the output terminal VO and the feedback terminal F.B, and the plurality of branch resistors R2, R3, R4 and R5 connected in series between the first node N1 and the ground terminal. The switches FET1, FET2 and FET3 are connected individually between at least one of nodes N2, N3 and N4 provided between the plurality of branch resistors R2, R3, R4 and R5, and the ground terminal.

The switches FET1, FET2 and FET3 connect one of the branch resistors R2, R3, R4 and R5 to the ground terminal according to a control signal like in the foregoing exemplary embodiment. According to which switches of FET1, FET2 and FET3 are turned on, the branch resistors R2, R3, R4 and R5 which are connected in series under the first resistor R1 are changed, and the feedback voltage VF.B is changed accordingly.

If the third switch FET3 is turned on by a first control signal or an enable signal, the feedback voltage VF.B is determined by the first resistor R1 and the second to fourth branch resistors R2, R3 and R4, and a corresponding rated voltage is output to the load terminal 20.

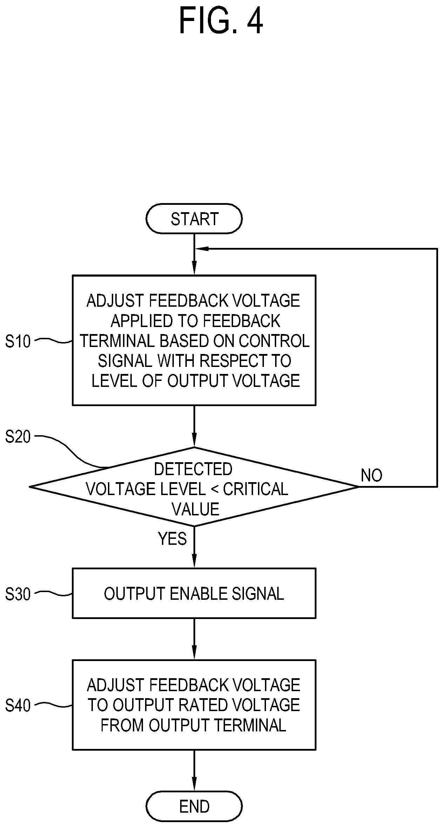

FIG. 4 is a control flowchart of a power control method of the electric device according to the exemplary embodiment of the present invention. The power control method by the microcomputer 51 will be described with reference to FIG. 4.

First, the feedback voltage VF.B which is applied to the feedback terminal F.B is adjusted on the basis of the control signal with respect to the level of the output voltage VOUT (S10). According to the level of the feedback voltage VF.B, the constant voltage output unit 10 adjusts the level of the output voltage VOUT and outputs the output voltage VOUT.

The detector 40 detects the level of the input voltage VIN of the load terminal 20, and determines whether the detected level of the input voltage VIN is the predetermined critical value or less (S20). The critical value may be lower than the lowest level of the output voltage VOUT.

If it is determined that the detected level of the input voltage VIN is the critical value or less, the enable signal is output to the controller 50 (S30).

If the third switch FET3 is turned on by the enable signal, the feedback voltage VF.B is adjusted to output the rated voltage from the output terminal VO (S40). Then, the output voltage VOUT may be changed to the rated voltage immediately upon the occurrence of the drop of the input voltage VIN input to the load terminal 20.

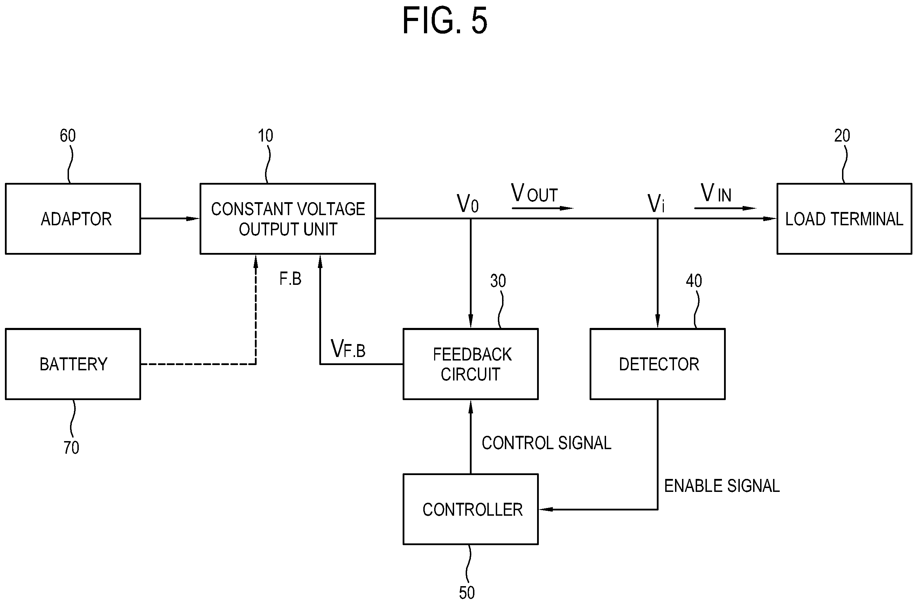

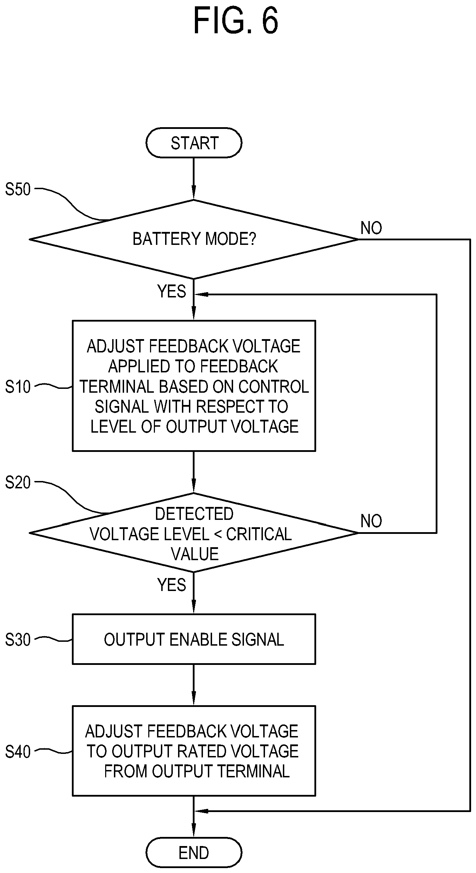

FIG. 5 is a control block diagram of an electric device according to another exemplary embodiment of the present invention. FIG. 6 is a control flowchart of a power control method of the electric device in FIG. 5.

As shown therein, the electric device further includes an adaptor 60 and a battery 70 which supply source power to a constant voltage output unit 10. Typically, a load terminal 20 of the electric device receives source power from the adaptor 60 if the adaptor 60 is connected to the electric device, and receives source power from the battery 70 if the adaptor 60 is not connected thereto. The former is defined an adaptor mode, and the latter is defined as a battery mode. In the battery mode, to secure the battery life, a voltage which is output from the constant voltage output unit 10 is lower than a rated voltage in the adaptor mode. That is, a performance of the load terminal 20 is adjusted to be lower and power consumption is reduced accordingly.

The controller 50 according to the present exemplary embodiment determines whether the load terminal 20 is driven in the battery mode as in FIG. 6 (S50). The battery mode may be set by a user's selection, or may automatically be set if the adaptor 60 is not connected to the electric device. If the battery mode is set, the feedback circuit 30 is controlled so that the output voltage VOUT becomes lower than the rated voltage as above.

If the electric device is driven in the battery mode, the controller 50 may enable the detector 40 and the OR circuit 53, and perform the control operation as above. That is, the controller 50 adjusts the feedback voltage VF.B applied to the feedback terminal F.B on the basis of the control signal as in FIG. 4 (S10), and the constant voltage output unit 10 adjusts the level of the output voltage VOUT according to the level of the feedback voltage VF.B and outputs the output voltage VOUT.

The controller 50 then determines whether the detected level of the input voltage VIN is the predetermined critical value or less (S20), and controls the feedback circuit 30 to cause the constant voltage output unit 10 to output the rated voltage from the output terminal VO according to the enable signal if the detected level of the input voltage VIN is the critical value or less (S30 and S40) .

Features of the present general inventive concept allow an electric device to be driven by less power to reduce power consumption, to detect input power of a load terminal to promptly and automatically respond to a sudden request for power from a load, and to supply a rated voltage corresponding to a detected level of the input power.

As described above, an electric device and a control method of the same according to an exemplary embodiment of the present invention efficiently changes a voltage to a rated voltage corresponding to a sudden change in a load terminal of a system that is intentionally driven by a voltage lower than the rated voltage to thereby supply stable power.

Also, an electric device and a control method of the same according to another exemplary embodiment of the present general inventive concept prevents a system error due to a sudden change in a load terminal.

## Claims

1. An electric device that comprises:
a constant voltage output unit (10) including a feedback terminal (F.B.) configured for receiving a feedback voltage and an output terminal (V0) configured for outputting an output voltage generated on the basis of the received feedback voltage and a predetermined reference voltage;
an adaptor (60) and a battery (70) configured to alternatively supply source power to the constant voltage output unit (10);
a feedback circuit (30) connected between the output terminal (V0) and the feedback terminal (F.B.) and configured for receiving a voltage proportional to the output voltage and for adjusting the feedback voltage applied to the feedback terminal;
a detector (40) configured for outputting an enable signal when the output voltage is equal to or lower than a predetermined critical value; and
a controller (50) configured for receiving the outputted enable signal and further configured for controlling the feedback circuit (30) to adjust the feedback voltage;
wherein the constant voltage output unit (10) is further configured for outputting a rated voltage in an adaptor mode, when being supplied with a first power from the adaptor (60), and for outputting a battery mode voltage lower than the rated voltage in a battery mode, when being supplied with a second power from the battery (70), said battery mode being set by selection of a user or being automatically set in absence of connection between the adaptor (60) and the electric device;
wherein the predetermined critical value is set to a value lower than the rated voltage and the battery mode voltage;
wherein when the controller (50) receives the outputted enable signal, the controller (50) controls the feedback circuit (30) to adjust the feedback voltage to cause the constant voltage output unit (10) to output the rated voltage as the output voltage from the output terminal (V0).

2. The electric device according to claim 1, wherein the predetermined critical value is lower than a lowest level of the output voltage.

3. The electric device according to claim 1, wherein the feedback circuit (30) comprises:
a first resistor connected between the output terminal (V0) and the feedback terminal (F.B.);
a plurality of branch resistors connected in parallel between a first node provided between the first resistor and the feedback terminal (F.B.), and a ground terminal; and
at least one switch connected in series to the branch resistors between the branch resistors and the ground terminal; and
the controller (50) comprises:
a microcomputer (51) configured for outputting a first control signal to control the feedback circuit (30) to adjust the feedback voltage to cause the constant voltage output unit (10) to output the rated voltage from the output terminal (V0); and
an OR circuit (53) configured for receiving one of the first control signal and the enable signal, and when one of the first control signal and the enable signal is received, further configured for outputting a signal to one of the switches to turn on the respective switch.

4. The electric device according to claim 1, wherein the feedback circuit (30) comprises:
a first resistor connected between the output terminal (V0) and the feedback terminal (F.B);
a plurality of branch resistors connected in series between a first node provided between the first resistor and the feedback terminal (F.B.), and a ground terminal; and
a switch individually connected between at least one node of the plurality of branch resistors and the ground terminal; and
the controller (50) comprises:
a microcomputer (51) configured for outputting a first control signal to control the feedback circuit (30) to adjust the feedback voltage to cause the constant voltage output unit (10) to output the rated voltage from the output terminal (V0); and
an OR circuit (53) configured for receiving one of the first control signal and the enable signal and when one of the first control signal and the enable signal is received, further configured for outputting a signal to the switch to turn on the switch.

5. The electric device of claim 1, wherein the feedback circuit (30) is configured for generating a feedback signal as a proportion of the output voltage and the constant voltage output unit (10) is configured for generating the output voltage according to the proportion.

6. The electric device of claim 5, wherein the constant voltage output unit (10) is configured for increasing the output voltage when the proportion of the feedback signal and the output voltage increases and is further configured for decreasing the output voltage when the proportion of the feedback signal and the output voltage decreases.

7. A control method of an electric device which comprises an adaptor and a battery to alternatively supply source power to a constant voltage output unit, the constant voltage output unit including a feedback terminal (F.B.) configured for receiving a feedback voltage and an output terminal (V0) configured for outputting an output voltage generated on the basis of the received feedback voltage and a predetermined reference voltage, the control method comprising:
determining by which one of the adaptor and the battery the source power is supplied (S50);
adjusting the feedback voltage applied to the feedback terminal (F.B.) on the basis of a control signal (S10);
detecting the output voltage and determining whether the detected voltage is equal to or lower than a predetermined critical value (S20);
outputting an enable signal if it is determined that the detected output voltage is equal to or lower than the critical value (S30);
wherein the constant voltage output unit (10) is further configured for outputting a rated voltage in an adaptor mode, when being supplied with a first power from the adaptor, and for outputting a battery mode voltage lower than the rated voltage in a battery mode, when being supplied with a second power from the battery, said battery mode being set by selection of a user or being automatically set in absence of connection between the adaptor and the electric device, and
wherein the predetermined critical value is set to a value lower than the rated voltage and the battery mode voltage, and
wherein the method further comprises adjusting the feedback voltage to cause the constant voltage output unit to output the rated voltage as the output voltage on the output terminal when the enable signal is output (S40).

8. The control method according to claim 7, wherein the critical value is lower than a lowest level of the output voltage.

9. The control method according to claim 7, wherein the electric device comprises a first resistor connected between the output terminal (V0) and the feedback terminal (F.B.);
a plurality of branch resistors connected in parallel between a first node provided between the first resistor and the feedback terminal (F.B.), and a ground terminal;
a feedback circuit which comprises at least one switch connected in series to the branch resistors between branch resistors and the ground terminal; and
the control method further comprises outputting the enable signal to one of the switches that is turned on by a first control signal to cause the constant voltage output unit to output the rated voltage from the output terminal (V0).

10. The control method according to claim 7, wherein the electric device comprises a first resistor connected between the output terminal (V0) and the feedback terminal (F.B.);
a plurality of branch resistors connected in series between a first node provided between the first resistor and the feedback terminal (F.B.), and a ground terminal;
a feedback circuit which comprises a switch individually connected between at least one node of the branch resistors and the ground terminal; and
the control method further comprises outputting the enable signal to one of the switches that is turned on by a first control signal to cause the constant voltage output unit to output the rated voltage from the output terminal (V0).

11. The control method according to claim 7, wherein the feedback circuit generates a feedback signal as a proportion of the output voltage and the constant voltage output unit generates the output voltage according to the proportion.

12. The control method according to claim 11, wherein the constant voltage output unit increases the output voltage when the proportion of the feedback signal and the output voltage increases and decreases the output voltage when the proportion of the feedback signal and the output voltage decreases.

## Patentansprüche

1. Elektrische Vorrichtung, die Folgendes umfasst:
eine Einheit (10) zur Ausgabe einer konstanten Spannung mit einem Rückkopplungsanschluss (F.B.), der zum Empfangen einer Rückkopplungsspannung konfiguriert ist, und einem Ausgangsanschluss (V0), der zum Ausgeben einer Ausgangsspannung konfiguriert ist, die auf der Basis der empfangenen Rückkopplungsspannung und einer vorbestimmten Referenzspannung erzeugt wird;
einen Adapter (60) und eine Batterie (70), die konfiguriert sind, um alternativ die Einheit (10) zur Ausgabe einer konstanten Spannung mit Quellstrom zu versorgen;
eine Rückkopplungsschaltung (30), die zwischen dem Ausgangsanschluss (V0) und dem Rückkopplungsanschluss (F.B.) geschaltet ist und zum Empfangen einer zu der Ausgangsspannung proportionalen Spannung sowie zum Einstellen der an den Rückkopplungsanschluss angelegten Rückkopplungsspannung konfiguriert ist;
einen Detektor (40), der zum Ausgeben eines Freigabesignals konfiguriert ist, wenn die Ausgangsspannung gleich oder niedriger als ein vorbestimmter kritischer Wert ist; und
eine Steuerung (50), die zum Empfangen des ausgegebenen Freigabesignals konfiguriert ist und weiterhin zum Steuern der Rückkopplungsschaltung (30) konfiguriert ist, um die Rückkopplungsspannung einzustellen,
wobei die Einheit (10) zur Ausgabe einer konstanten Spannung weiterhin dazu konfiguriert ist, in einem Adaptermodus eine Nennspannung auszugeben, wenn sie mit einem ersten Strom von dem Adapter (60) versorgt wird, und in einem Batteriemodus eine Batteriemodusspannung auszugeben,
die niedriger als die Nennspannung ist, wenn sie mit einem zweiten Strom aus der Batterie (70) versorgt wird, wobei der Batteriemodus durch eine Auswahl durch einen Benutzer eingestellt wird oder automatisch eingestellt wird, wenn keine Verbindung zwischen dem Adapter (60) und dem elektrischen Gerät besteht;
wobei der vorbestimmte kritische Wert auf einen Wert eingestellt ist, der niedriger als die Nennspannung und die Batteriemodusspannung ist;
wobei, wenn die Steuerung (50) das ausgegebene Freigabesignal empfängt, die Steuerung (50) die Rückkopplungsschaltung (30) derart steuert, dass sie die Rückkopplungsspannung einstellt, um zu bewirken, dass die Einheit (10) zur Ausgabe einer konstanten Spannung die Nennspannung als Ausgangsspannung von dem Ausgangsanschluss (V0) ausgibt.

2. Elektrische Vorrichtung nach Anspruch 1, wobei der vorbestimmte kritische Wert niedriger als ein niedrigster Pegel der Ausgangsspannung ist.

3. Elektrische Vorrichtung nach Anspruch 1, wobei die Rückkopplungsschaltung (30) Folgendes umfasst:
einen ersten Widerstand, der zwischen dem Ausgangsanschluss (V0) und dem Rückkopplungsanschluss (F.B.) angeschlossen ist;
eine Vielzahl von Abzweigwiderständen, die parallel zwischen einem ersten Knoten, der zwischen dem ersten Widerstand und dem Rückkopplungsanschluss (F.B.) vorgesehen ist, und einem Erdungsanschluss geschaltet sind; und
wenigstens einen Schalter, der mit den Abzweigwiderständen zwischen den Abzweigwiderständen und dem Erdungsanschluss in Reihe geschaltet ist;
wobei die Steuerung (50) Folgendes umfasst:
einen Mikrocomputer (51), der zum Ausgeben eines ersten Steuersignals zum Steuern der Rückkopplungsschaltung (30) konfiguriert ist, um die Rückkopplungsspannung derart einzustellen, dass sie bewirkt, dass die Einheit (10) zur Ausgabe einer konstanten Spannung die Nennspannung durch den Ausgangsanschluss (V0) ausgibt; und
eine ODER-Schaltung (53), die zum Empfangen des ersten Steuersignals oder des Freigabesignals konfiguriert ist, und wenn das erste Steuersignal oder das Freigabesignal empfangen wird, weiterhin zum Ausgeben eines Signals an einen der Schalter zum Einschalten des entsprechenden Schalters konfiguriert ist.

4. Elektrische Vorrichtung nach Anspruch 1, wobei die Rückkopplungsschaltung (30) Folgendes umfasst:
einen ersten Widerstand, der zwischen dem Ausgangsanschluss (V0) und dem Rückkopplungsanschluss (F.B.) angeschlossen ist;
eine Vielzahl von Abzweigwiderständen, die zwischen einem ersten Knoten, der zwischen dem ersten Widerstand und dem Rückkopplungsanschluss (F.B.) vorgesehen ist, und einem Erdungsanschluss in Reihe geschaltet sind; und
einen Schalter, der einzeln zwischen wenigstens einem Knoten der Vielzahl von Abzweigwiderstände und dem Erdungsanschluss verbunden ist; und
wobei die Steuerung (50) Folgendes umfasst:
einen Mikrocomputer (51), der zum Ausgeben eines ersten Steuersignals zum Steuern der Rückkopplungsschaltung (30) konfiguriert ist, um die Rückkopplungsspannung derart einzustellen, dass sie bewirkt, dass die Einheit (10) zur Ausgabe einer konstanten Spannung die Nennspannung durch den Ausgangsanschluss (V0) ausgibt; und
eine ODER-Schaltung (53), die zum Empfangen des ersten Steuersignals oder des Freigabesignals konfiguriert ist, und wenn das erste Steuersignal oder das Freigabesignal empfangen wird, weiterhin zum Ausgeben eines Signals an den Schalter zum Einschalten des Schalters konfiguriert ist.

5. Elektrische Vorrichtung nach Anspruch 1, wobei die Rückkopplungsschaltung (30) zum Erzeugen eines Rückkopplungssignals proportional zu der Ausgangsspannung konfiguriert ist, und die Einheit (10) zur Ausgabe einer konstanten Spannung zum Erzeugen der Ausgangsspannung gemäß der Proportion konfiguriert ist.

6. Elektrische Vorrichtung nach Anspruch 5, wobei die Einheit (10) zur Ausgabe einer konstanten Spannung zum Erhöhen der Ausgangsspannung konfiguriert ist, wenn die Proportion des Rückkopplungssignals und der Ausgangsspannung zunimmt, und weiterhin zum Verringern der Ausgangsspannung konfiguriert ist, wenn die Proportion des Rückkopplungssignals und der Ausgangsspannung abnimmt.

7. Verfahren zur Steuerung einer elektrischen Vorrichtung, die einen Adapter und eine Batterie umfasst, um alternativ eine Einheit zur Ausgabe einer konstanten Spannung mit Quellstrom zu versorgen, wobei die Einheit zur Ausgabe einer konstanten Spannung einen Rückkopplungsanschluss (F.B.), der zum Empfangen einer Rückkopplungsspannung konfiguriert ist, und einen Ausgangsanschluss (V0) aufweist, der zum Ausgeben einer Ausgangsspannung konfiguriert ist, die auf der Basis der empfangenen Rückkopplungsspannung und einer vorbestimmten Referenzspannung erzeugt wird, wobei das Steuerungsverfahren Folgendes umfasst:
Bestimmen, ob der Quellstrom durch den Adapter oder die Batterie zugeführt wird (S50);
Einstellen der an den Rückkopplungsanschluss (F.B.) angelegten Rückkopplungsspannung auf der Basis eines Steuersignals (S10);
Erfassen der Ausgangsspannung und Bestimmen, ob die erfasste Spannung gleich oder niedriger als ein vorbestimmter kritischer Wert ist (S20);
Ausgeben eines Freigabesignals, wenn bestimmt wird, dass die erfasste Ausgangsspannung gleich oder niedriger als der kritische Wert ist (S30);
wobei die Einheit (10) zur Ausgabe einer konstanten Spannung weiterhin dazu konfiguriert ist, in einem Adaptermodus eine Nennspannung auszugeben, wenn sie mit einem ersten Strom von dem Adapter (60) versorgt wird, und in einem Batteriemodus eine Batteriemodusspannung auszugeben, die niedriger als die Nennspannung ist, wenn sie mit einem zweiten Strom aus der Batterie (70) versorgt wird, wobei der Batteriemodus durch eine Auswahl durch einen Benutzer eingestellt wird oder automatisch eingestellt wird, wenn keine Verbindung zwischen dem Adapter (60) und dem elektrischen Gerät besteht; und
wobei der vorbestimmte kritische Wert auf einen Wert eingestellt ist, der niedriger als die Nennspannung und die Batteriemodusspannung ist; und
wobei das Verfahren weiterhin das Einstellen der Rückkopplungsspannung umfasst, um zu bewirken, dass die Konstantspannungsausgabeeinheit die Nennspannung als Ausgangsspannung am Ausgangsanschluss ausgibt, wenn das Freigabesignal ausgegeben wird (S40).

8. Steuerungsverfahren nach Anspruch 7, wobei der kritische Wert niedriger als ein niedrigster Pegel der Ausgangsspannung ist.

9. Steuerungsverfahren nach Anspruch 7, wobei die elektrische Vorrichtung Folgendes umfasst:
einen ersten Widerstand, der zwischen dem Ausgangsanschluss (V0) und dem Rückkopplungsanschluss (F.B.) angeschlossen ist;
eine Vielzahl von Abzweigwiderständen, die parallel zwischen einem ersten Knoten, der zwischen einem ersten Widerstand und dem Rückkopplungsanschluss (F.B.) vorgesehen ist, und einem Erdungsanschluss geschaltet sind;
eine Rückkopplungsschaltung, die wenigstens einen Schalter umfasst, der mit den Abzweigwiderständen zwischen den Abzweigwiderständen und dem Erdungsanschluss in Reihe geschaltet ist; und
wobei das Steuerungsverfahren weiterhin das Ausgeben des Freigabesignals an einen der Schalter umfasst, der durch ein erstes Steuersignal eingeschaltet wird, um zu bewirken, dass die Einheit zur Ausgabe einer konstanten Spannung die Nennspannung durch den Ausgangsanschluss (V0) ausgibt.

10. Steuerungsverfahren nach Anspruch 7, wobei die elektrische Vorrichtung Folgendes umfasst:
einen ersten Widerstand, der zwischen dem Ausgangsanschluss (V0) und dem Rückkopplungsanschluss (F.B.) angeschlossen ist;
eine Vielzahl von Abzweigwiderständen, die zwischen einem ersten Knoten, der zwischen dem ersten Widerstand und dem Rückkopplungsanschluss (F.B.) vorgesehen ist, und einem Erdungsanschluss in Reihe geschaltet sind;
eine Rückkopplungsschaltung, die einen Schalter umfasst, der einzeln zwischen wenigstens einem Knoten der Abzweigwiderstände und dem Erdungsanschluss verbunden ist; und
wobei das Steuerungsverfahren weiterhin das Ausgeben des Freigabesignals an einen der Schalter umfasst, der durch ein erstes Steuersignal eingeschaltet wird, um zu bewirken, dass die Einheit zur Ausgabe einer konstanten Spannung die Nennspannung durch den Ausgangsanschluss (V0) ausgibt.

11. Steuerungsverfahren nach Anspruch 7, wobei die Rückkopplungsschaltung ein Rückkopplungssignal proportional zu der Ausgangsspannung erzeugt, und die Einheit zur Ausgabe einer konstanten Spannung die Ausgangsspannung gemäß der Proportion erzeugt.

12. Steuerungsverfahren nach Anspruch 11, wobei die Einheit zur Ausgabe einer konstanten Spannung die Ausgangsspannung erhöht, wenn die Proportion des Rückkopplungssignals und der Ausgangsspannung zunimmt, und die Ausgangsspannung verringert, wenn die Proportion des Rückkopplungssignals und der Ausgangsspannung abnimmt.

## Revendications

1. Dispositif électrique comprenant :
une unité de production de tension constante (10) comportant une borne de rétroaction (F.B.) conçue pour recevoir une tension de rétroaction et une borne de sortie (V0) conçue pour émettre une tension de sortie produite compte tenu de la tension de rétroaction reçue et d'une tension de référence prédéterminée,
un adaptateur (60) et une batterie (70) conçus de manière que l'un ou l'autre soit source de courant d'alimentation fourni à l'unité de production de tension constante (10),
un circuit de rétroaction (30) branché entre la borne de sortie (V0) et la borne de rétroaction (F.B.) et conçu pour recevoir une tension proportionnelle à la tension de sortie et pour régler la tension de rétroaction appliquée à la borne de rétroaction,
un détecteur (40) conçu pour émettre un signal d'activation lorsque la tension de sortie est égale ou inférieure à une valeur critique prédéterminée, et
un organe de commande (50) conçu pour recevoir le signal d'activation émis et conçu en outre pour commander au circuit de rétroaction (30) de régler la tension de rétroaction ;
ladite unité de production de tension constante (10) étant conçue en outre pour émettre une tension nominale en mode adaptateur, lorsqu'elle est alimentée par un premier courant provenant de l'adaptateur (60), et pour émettre une tension en mode batterie qui est inférieure à la tension nominale lorsqu'elle se trouve en mode batterie et qu'elle est alimentée par un deuxième courant provenant de la batterie (70), ledit mode batterie étant établi à la suite d'une sélection par un utilisateur ou étant établi automatiquement en l'absence de connexion entre l'adaptateur (60) et le dispositif électrique,
ladite valeur critique prédéterminée étant établie à une valeur qui est inférieure à la tension nominale et à la tension en mode batterie,
après réception, par l'organe de commande (50), du signal d'activation émis, l'organe de commande (50) commandant au circuit de rétroaction (30) de régler la tension de rétroaction afin d'amener l'unité de production de tension constante (10) à émettre la tension nominale en tant que tension de sortie par la borne de sortie (V0).

2. Dispositif électrique selon la revendication 1, dans lequel la valeur critique prédéterminée est en dessous d'un niveau inférieur de la tension de sortie.

3. Dispositif électrique selon la revendication 1, dans lequel le circuit de rétroaction (30) comprend :
un premier résistor branché entre la borne de sortie (V0) et la borne de rétroaction (F.B.),
une pluralité de résistors de branche branchés en parallèle entre un premier nœud, prévu entre le premier résistor et la borne de rétroaction (F.B.), et une borne de masse, et
au moins un commutateur branché en série aux résistors de branche entre les résistors de branche et la borne de masse ;
ledit organe de commande (50) comprend :
un microordinateur (51) conçu pour émettre un premier signal de commande permettant de commander au circuit de rétroaction (30) de régler la tension de rétroaction afin d'amener l'unité de production de tension constante (10) à émettre la tension nominale par la borne de sortie (V0), et
un circuit OU (53) conçu pour recevoir le premier signal de commande ou le signal d'activation, et à la réception du premier signal de commande ou du signal d'activation, conçu en outre pour émettre un signal à destination de l'un des commutateurs afin d'activer ledit commutateur.

4. Dispositif électrique selon la revendication 1, dans lequel le circuit de rétroaction (30) comprend :
un premier résistor branché entre la borne de sortie (V0) et la borne de rétroaction (F.B.),
une pluralité de résistors de branche branchés en série entre un premier nœud, prévu entre le premier résistor et la borne de rétroaction (F.B.), et une borne de masse, et
un commutateur individuellement branché entre au moins un nœud de la pluralité de résistors de branche et la borne de masse ; et
ledit organe de commande (50) comprend :
un microordinateur (51) conçu pour émettre un premier signal de commande afin de commander au circuit de rétroaction (30) de régler la tension de rétroaction afin d'amener l'unité de production de tension constante (10) à émettre la tension nominale par la borne de sortie (V0), et
un circuit OU (53) conçu pour recevoir le premier signal de commande ou le signal d'activation et, à la réception du premier signal de commande ou du signal d'activation, conçu en outre pour émettre un signal à destination du commutateur afin d'activer le commutateur.

5. Dispositif électrique selon la revendication 1, dans lequel le circuit de rétroaction (30) est conçu pour générer un signal de rétroaction en proportion de la tension de sortie et l'unité de production de tension constante (10) est conçue pour générer la tension de sortie conformément à ladite proportion.

6. Dispositif électrique selon la revendication 5, dans lequel l'unité de production de tension constante (10) est conçue pour augmenter la tension de sortie lorsque la proportion du signal de rétroaction et de la tension de sortie augmente et est conçu en outre pour diminuer la tension de sortie lorsque la proportion du signal de rétroaction et de la tension de sortie diminue.

7. Procédé de commande d'un dispositif électrique comprenant un adaptateur et une batterie de façon que l'un ou l'autre soit source de courant d'alimentation fourni à une unité de production de tension constante, l'unité de production de tension constante comportant une borne de rétroaction (F.B.) conçue pour recevoir une tension de rétroaction et une borne de sortie (V0) conçue pour émettre une tension de sortie produite compte tenu de la tension de rétroaction reçue et d'une tension de référence prédéterminée, le procédé de commande comprenant :
la détermination de la source, parmi l'adaptateur et la batterie, fournissant le courant d'alimentation (S50),
le réglage de la tension de rétroaction appliquée à la borne de rétroaction (F.B.) compte tenu d'un signal de commande (S10),
la détection de la tension de sortie et la détermination du fait que la tension détectée est égale ou inférieure à une valeur critique prédéterminée (S20), et
l'émission d'un signal d'activation s'il a été déterminé que la tension de sortie détectée est égale ou inférieure à la valeur critique (S30) ;
ladite unité de production de tension constante (10) étant conçue en outre pour émettre une tension nominale en mode adaptateur, lorsqu'elle est alimentée par un premier courant provenant de l'adaptateur, et pour émettre une tension en mode batterie qui est inférieure à la tension nominale lorsqu'elle se trouve en mode batterie et qu'elle est alimentée par un deuxième courant provenant de la batterie, ledit mode batterie étant établi à la suite d'une sélection par un utilisateur ou étant établi automatiquement en l'absence de connexion entre l'adaptateur et le dispositif électrique, et ladite valeur critique prédéterminée étant établie à une valeur qui est inférieure à la tension nominale et à la tension en mode batterie ;
ledit procédé comprenant en outre le réglage de la tension de rétroaction afin d'amener l'unité de production de tension constante à émettre la tension nominale en tant que tension de sortie à la borne de sortie lorsque le signal d'activation est émis (S40).

8. Procédé de commande selon la revendication 7, dans lequel la valeur critique est en dessous d'un niveau inférieur de la tension de sortie.

9. Procédé de commande selon la revendication 7, dans lequel le dispositif électrique comprend :
un premier résistor branché entre la borne de sortie (V0) et la borne de rétroaction (F.B.),
une pluralité de résistors de branche branchés en parallèle entre un premier nœud, prévu entre un premier résistor et la borne de rétroaction (F.B.), et une borne de masse, et
un circuit de rétroaction comprenant au moins un commutateur branché en série aux résistors de branche entre les résistors de branche et la borne de masse ;
le procédé de commande comprenant en outre l'émission du signal d'activation à destination de celui des commutateurs qui est activé par un premier signal de commande afin d'amener l'unité de production de tension constante à émettre la tension nominale par la borne de sortie (V0).

10. Procédé de commande selon la revendication 7, dans lequel le dispositif électrique comprend :
un premier résistor branché entre la borne de sortie (V0) et la borne de rétroaction (F.B.),
une pluralité de résistors de branche branchés en série entre un premier nœud, prévu entre le premier résistor et la borne de rétroaction (F.B.), et une borne de masse, et
un circuit de rétroaction comprenant un commutateur individuellement branché entre au moins un nœud des résistors de branche et la borne de masse ;
le procédé de commande comprenant en outre l'émission du signal d'activation à destination de celui des commutateurs qui est activé par un premier signal de commande afin d'amener l'unité de production de tension constante à émettre la tension nominale par la borne de sortie (V0).

11. Procédé de commande selon la revendication 7, dans lequel le circuit de rétroaction génère un signal de rétroaction en proportion de la tension de sortie et l'unité de production de tension constante génère la tension de sortie conformément à ladite proportion.

12. Procédé de commande selon la revendication 11, dans lequel l'unité de production de tension constante augmente la tension de sortie lorsque la proportion du signal de rétroaction et de la tension de sortie augmente, et diminue la tension de sortie lorsque la proportion du signal de rétroaction et de la tension de sortie diminue.
